# EUROPÄISCHE PATENTSCHRIFT

(11) **EP 2 934 951 B1**
(45) Veröffentlichungstag und Bekanntmachung des Hinweises auf die Patenterteilung: **01.07.2020**
(21) Anmeldenummer: 13711833.7
(22) Anmeldetag: 14.03.2013
(51) Int. Cl.: B60R 16/00, F02D 41/20, F02D 11/10

(54) **AKTOR, KRAFTFAHRZEUG MIT EINEM DERARTIGEN AKTOR UND VERFAHREN ZUM BETREIBEN EINES AKTORS**
ACTUATOR, MOTOR VEHICLE COMPRISING SUCH ACTUATOR AND METHOD FOR OPERATING AN ACTUATOR
ACTIONNEUR, VÉHICULE AUTOMOBILE ÉQUIPÉ D'UN TEL ACTIONNEUR ET PROCÉDÉ D'UTILISATION D'UN ACTIONNEUR

(30) Priorität: 19.12.2012 DE 102012024862
(43) Veröffentlichungstag der Anmeldung: 28.10.2015
(73) Patentinhaber: Audi AG, 85045 Ingolstadt (DE)
(72) Erfinder: KILGER, Michael, 93326 Abensberg (DE)
(74) Vertreter: Brandt, Kai
(86) Internationale Anmeldenummer: PCT/EP2013/000784
(87) Internationale Veröffentlichungsnummer: WO 2014/094920

(56) Entgegenhaltungen:
- DE-A1- 4 036 844
- DE-A1- 10 003 989
- DE-A1-102005 022 127
- US-A1- 2011 025 235
- US-B1- 6 321 781

## Beschreibung

Die Erfindung betrifft einen Aktor, der zum Umsetzen eines elektronischen Signals in mechanische Bewegung ausgebildet ist, mit einer Losreißfunktion zum Beheben einer Funktionsstörung wie ein Verklemmen.

Der in dieser Anmeldung verwendete Begriff Aktor bezeichnet generell einen Steller oder ein Stellelement, das vorzugsweise in einem Kraftfahrzeug eingesetzt werden kann, um ein elektronisches Signal in eine Bewegung umzusetzen. Durch diese Bewegung einer Komponente kann eine Verstellung eines bewegbaren Bauteils realisiert werden, um eine bestimmte, gewünschte Funktion auszuführen. Die Verstellung kann z. B. als Verschiebung oder Drehung erfolgen. Aktoren dieser Art werden in großer Zahl bei Kraftfahrzeugen eingesetzt, um z. B. an einem Verbrennungsmotor oder diesem zugeordneten Aggregaten oder am Fahrwerk oder der Karosserie mechanische Verstellbewegungen vorzunehmen.

Aktoren weisen zumeist einen elektromechanischen Antrieb auf, der ein elektromagnetisches Feld erzeugt, das eine Kraft auf ein bewegliches oder verstellbares Bauteil ausübt, wodurch die gewünschte Bewegung ausgelöst wird. Bei Aktoren, die in Kraftfahrzeugen verbaut werden, muss während der gesamten Lebensdauer ein sicherer Betrieb gewährleistet sein. Mit zunehmender Lebensdauer können jedoch Störungen wie ein Verklemmen auftreten, wodurch in der Folge eine Fehlfunktion eines Aggregats, das diese Verstellfunktion benötigt, verursacht werden kann. Es ist daher bereits bekannt, für Aktoren eine Losreißfunktion vorzusehen, wobei die von dem Aktor ausgeübte Kraft oder das von dem Aktor ausgeübte Drehmoment temporär verändert wird mit dem Ziel, die im verklemmten Zustand vorhandene erhöhte Reibung zu überwinden und die normale Funktion wieder herzustellen.

In der DE 197 39 827 A1 werden ein Verfahren und eine Vorrichtung zur Steuerung einer Betriebsgröße eines Kraftfahrzeugs vorgeschlagen, wobei ein reibungsgehaftetes, eine Betriebsgröße beeinflussendes Stellelement durch ein Ansteuersignal betätigt wird, wobei das Ansteuersignal verändert wird, bis Haftreibung überwunden worden ist.

Die DE 40 36 844 A zeigt, während des Startens eines Motors, während dem der bewegliche Teil eines Leerlaufsteuerventils festkleben kann, die elektrische Spannung zum Antrieb des Leerlaufsteuerventils temporär über eine obere Grenze im Normalbetrieb zu erhöhen.

Die US 2011/025235 A1 zeigt einen Aktor mit einem translatorisch bewegbaren Element, wobei das dem Aktor zugeführte Signal verändert wird, um eine statische Reibung zwischen dem translatorisch bewegbaren Element und einer Führung zu überwinden. Die DE 198 45 524 A1 schlägt einen elektromagnetischen Steller für Verbrennungsmotoren vor, bei dem eine Losreißfunktion implementiert ist. Das Losreißen erfolgt durch eine Änderung des Tastverhältnisses des Ansteuersignals.

In ähnlicher Weise wird in der DE 103 54 470 A1 ein Verfahren zum Steuern eines Stellelements angegeben, bei dem eine Losreißfunktion vorgesehen ist. Das Ansteuersignal ist ein pulsweitenmoduliertes Signal. Um ein Losreißen des Stellelements auszulösen, werden das Tastverhältnis und/oder die Amplitude des Ansteuersignal verändert.

Die US 5 078 110 A schlägt ein Verfahren und eine Vorrichtung vor, um einen blockierten Aktor zu erkennen und loszureißen. Dabei wird vorgeschlagen, das Steuersignal in einem bestimmten Zeitfenster zu erhöhen oder zu verringern, um die gewünschte Stellbewegung des Aktors zu ermöglichen. Die GB 2 267 581 A schlägt vor, bei einem in einem Kraftfahrzeug eingesetzten Aktor ein pulsweitenmoduliertes Signal mit wenigstens zwei Frequenzen zu verwenden, um eine Verklemmung zu beheben oder einer Verklemmung vorzubeugen.

Die verschiedenen im Stand der Technik bekannten Vorrichtungen und Verfahren, um ein Verklemmen eines Aktors zu beseitigen, benötigen zumeist eine aufwändige Steuerung.

Der Erfindung liegt daher die Aufgabe zugrunde, einen Aktor anzugeben, bei dem die Losreißfunktion einfacher und effektiver realisiert werden kann.

Zur Lösung dieser Aufgabe ist ein Aktor nach Anspruch 1 vorgesehen, welcher erfindungsgemäß ein Mittel umfasst, um dem Aktor bei aktivierter Losreißfunktion eine erhöhte elektrische Spannung zuzuführen.

Die Erfindung beruht auf der Überlegung, dass eine vorübergehende Anhebung der Versorgungsspannung des Aktors eine Erhöhung der ausgeübten Kraft oder des Drehmoments bewirkt, wodurch die Verklemmung gelöst wird. Durch die erhöhte Kraft bzw. das erhöhte Drehmoment können in den meisten Fällen die auftretenden Reibungskräfte überwunden werden, die eine Verstellung des Aktors verhindert haben. Die erfindungsgemäß vorgesehene Erhöhung der Versorgungsspannung kann vergleichsweise einfach umgesetzt werden. Dazu weist das Mittel des erfindungsgemäßen Aktors vorzugsweise eine Steuerungseinrichtung auf, die zum Erhöhen der dem Aktor zugeführten Spannung bei aktivierter Losreißfunktion ausgebildet ist. Dementsprechend kann eine zumeist ohnehin vorhandene Steuerungseinrichtung genutzt werden, um die Versorgungsspannung des Aktors in der gewünschten Weise zu beeinflussen.

Gemäß der Erfindung ist vorgesehen, dass der Aktor einen Wegsensor zum Erzeugen eines Sensorsignals aufweist. Mittels des Wegsensors kann die Position des Aktors bzw. einer beweglichen Komponente des Aktors erfasst werden, sodass eine gegebenenfalls vorhandene Fehlfunktion, z. B. ein Verklemmen, erkannt werden kann.

In diesem Zusammenhang kann es auch vorgesehen sein, dass die Steuerungseinrichtung zum Auswerten des Sensorsignals und zum Feststellen einer Funktionsstörung ausgebildet ist. Nach dem Erkennen einer Funktionsstörung kann die Losreißfunktion aktiviert werden, um die Störung zu beseitigen.

Daneben betrifft die Erfindung ein Kraftfahrzeug. Das erfindungsgemäße Kraftfahrzeug zeichnet sich dadurch aus, dass es wenigstens einen Aktor der beschriebenen Art aufweist. Der Aktor kann z. B. an einer Brennkraftmaschine, an einem der Brennkraftmaschine zugeordneten Aggregat, am Fahrwerk oder an der Karosserie angeordnet sein, um ein elektronisches Signal in mechanische Bewegung umzusetzen.

Daneben betrifft die Erfindung ein Verfahren gemäß Anspruch 5 zum Betreiben eines Aktors, der ein elektronisches Signal in eine mechanische Bewegung umsetzt, bei dem eine Losreißfunktion zum Beheben einer Funktionsstörung wie ein Verklemmen implementiert ist.

Das erfindungsgemäße Verfahren zeichnet sich dadurch aus, dass dem Aktor bei aktivierter Losreißfunktion eine erhöhte elektrische Spannung zugeführt wird.

Die Unteransprüche enthalten weitere Ausgestaltungen des erfindungsgemäßen Verfahrens.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: einen erfindungsgemäßen Aktor; und
- Fig. 2: den zeitlichen Verlauf der Spannung bei aktivierter Losreißfunktion.

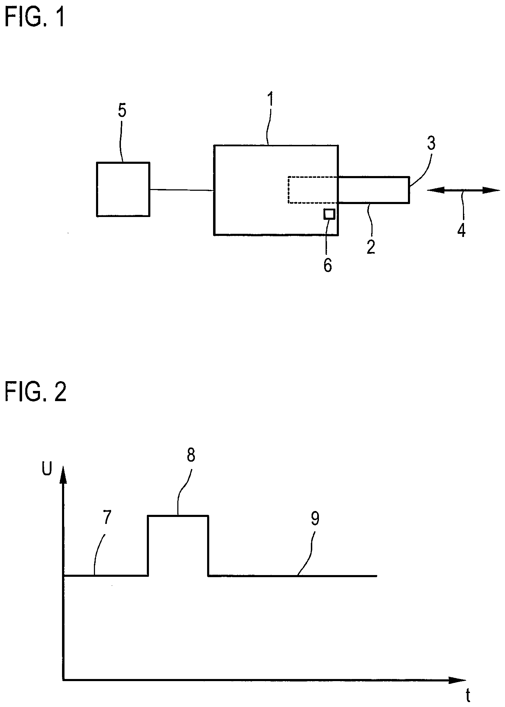

Fig. 1 zeigt einen Aktor 1, der zum Umsetzen eines elektronischen Signals in mechanische Bewegung ausgebildet ist. Der Aktor 1 umfasst einen Kolben 2, dessen freies Ende 3 von einem Gehäuse des Aktors 1 absteht. Der Kolben 2 ist entlang der durch den Doppelpfeil 4 angegebenen Richtung bewegbar. Die Bewegung des Kolbens 2 erfolgt elektromechanisch, wodurch der Kolben 2 positioniert werden kann. An dem freien Ende 3 kann ein weiteres Bauteil angebracht sein oder der Kolben 2 kann durch die Bewegung eine Aktion auslösen, z. B. eine Klappe öffnen oder schließen oder ein anderes Bauteil bewegen oder positionieren.

Der Aktor 1 weist einen elektromechanischen Antrieb auf, der in Fig. 1 nicht näher dargestellt ist. Eine Steuerungseinrichtung 5 steuert den mit ihr verbundenen Aktor 1, in dem sie die Versorgungsspannung für den elektromechanischen Antrieb steuert. Ein in dem Aktor 1 angeordneter Wegsensor 6 ist zum Erfassen der Position des Kolbens 2 und zum Erzeugen eines Sensorsignals ausgebildet. Die Auswertung des Sensorsignals des Wegsensors 6 erfolgt in der Steuerungseinrichtung 5.

Eine Funktionsstörung des Aktors 1, insbesondere ein Verklemmen des Kolbens, kann anhand des von dem Wegsensor 6 gelieferten Sensorsignals von der Steuerungseinrichtung 5 erkannt werden. Wenn eine Funktionsstörung wie ein Verklemmen auftritt, aktiviert die Steuerungseinrichtung 5 eine Losreißfunktion. Dazu wird dem Aktor 1 eine erhöhte elektrische Spannung als Versorgungsspannung zugeführt.

Fig. 2 zeigt den Verlauf der Versorgungsspannung bei aktivierter Losreißfunktion. Fig. 2 ist ein Diagramm, bei dem auf der horizontalen Achse die Zeit und auf der senkrechten Achse die Spannung qualitativ aufgetragen ist.

Während des störungsfreien Betriebs wird dem Aktor 1 eine bestimmte Versorgungsspannung zugeführt. Dieses Spannungsniveau wird durch das Bezugszeichen 7 in Fig. 2 angegeben. Beim Auftreten einer Funktionsstörung wird die Losreißfunktion aktiviert. Das Bezugszeichen 8 zeigt den Zeitraum an, währenddessen die Versorgungsspannung des Aktors 1 von der Steuerungseinrichtung 5 erhöht wird. Durch die erhöhte Spannung erhöht sich die auf den Kolben 2 ausgeübte Kraft, sodass die das Verklemmen verursachende Reibung überwunden werden kann, sodass der Kolben 2 an die gewünschte Position bewegt werden kann. Die ordnungsgemäße Funktion der Bewegung des Kolbens 2 kann anhand des von dem Wegsensor 6 gelieferten Sensorsignals verifiziert werden. Sobald festgestellt worden ist, dass der Kolben 2 störungsfrei bewegt werden kann, ohne dass ein Verklemmen auftritt, wird - wie in Fig. 2 gezeigt ist, die Versorgungsspannung des Aktors 1 wieder auf einen normalen Wert reduziert. Das Bezugszeichen 9 bezeichnet das Niveau der Versorgungsspannung, nachdem die Losreißfunktion deaktiviert worden ist. Typischerweise wird die Losreißfunktion lediglich kurzzeitig aktiviert, das heißt, die erhöhte Versorgungsspannung liegt z. B. wenige Sekunden an dem Aktor an.

## Patentansprüche

1. Aktor (1), der zum Umsetzen eines elektronischen Signals in mechanische Bewegung ausgebildet ist, mit einer Losreißfunktion zum Beheben einer Funktionsstörung wie ein Verklemmen, umfassend ein Mittel, um dem Aktor (1) bei aktivierter Losreißfunktion eine erhöhte elektrische Spannung zuzuführen,
**dadurch gekennzeichnet,**
**dass** der Aktor (1) einen translatorisch bewegbaren Kolben (2) aufweist, sowie einen Wegsensor (6) zum Erfassen der Position des Kolbens (2) und zum Erzeugen eines Sensorsignals, wobei die erhöhte Spannung in Abhängigkeit des Sensorsignals zugeführt wird.

2. Aktor nach Anspruch 1,
**dadurch gekennzeichnet,**
**dass** das Mittel eine Steuerungseinrichtung (5) umfasst, die zum Erhöhen der dem Aktor (1) zugeführten Spannung bei aktivierter Losreißfunktion ausgebildet ist,

3. Aktor nach Anspruch 2,
**dadurch gekennzeichnet,**
**dass** die Steuerungseinrichtung (5) zum Auswerten des Sensorsignals und zum Feststellen einer Funktionsstörung ausgebildet ist.

4. Kraftfahrzeug,
**dadurch gekennzeichnet,**
**dass** es wenigstens einen Aktor (1) nach einem der Patentansprüche 1 bis 3 aufweist.

5. Verfahren zum Betreiben eines Aktors, der ein elektronisches Signal in eine mechanische Bewegung umsetzt, bei dem eine Losreißfunktion zum Beheben einer Funktionsstörung wie ein Verklemmen implementiert ist, wobei dem Aktor bei aktivierter Losreißfunktion eine erhöhte elektrische Spannung zugeführt wird,
**dadurch gekennzeichnet,**
**dass** der Aktor einen translatorisch bewegbaren Kolben aufweist, sowie einen Wegsensor, der die Position des Kolbens erfasst und ein Sensorsignal erzeugt, wobei die erhöhte Spannung in Abhängigkeit des Sensorsignals zugeführt wird.

6. Verfahren nach Anspruch 5,
**dadurch gekennzeichnet,**
**dass** eine Funktionsstörung wie ein Verklemmen mittels einer Steuerungseinrichtung festgestellt wird.

## Claims

1. Actuator (1) which is configured to convert an electronic signal into mechanical movement, having a release function to resolve a dysfunction such as a jamming, comprising a means to supply an increased electrical voltage to the actuator (1) if the release function is activated,
**characterised in**
**that** the actuator (1) has a translationally movable piston (2), as well as a displacement sensor (6) for detecting the position of the piston (2) and for generating a sensor signal, wherein the increased voltage is supplied depending on the sensor signal.

2. Actuator according to claim 1
**characterised in**
**that** the means includes a control device (5) which is configured to increase the voltage supplied to the actuator (1) if the release function is activated.

3. Actuator according to claim 2
**characterised in**
**that** the control device (5) is configured to evaluate the sensor signal and for determining a dysfunction.

4. Motor vehicle
**characterised in**
**that** it has at least one actuator (1) according to any of claims 1 to 3.

5. Method for operating an actuator, which converts an electronic signal into a mechanical movement, in which a release function is implemented for resolving a dysfunction such as a jamming, wherein an increased electrical voltage is supplied to the actuator if the release function is activated,
**characterised in**
**that** the actuator has a translationally movable piston and a displacement sensor which detects the position of the piston and generates a sensor signal, wherein the increased voltage is supplied depending on the sensor signal.

6. Method according to claim 5
**characterised in**
**that** a dysfunction such as a jamming is determined by means of a control device.

## Revendications

1. Actionneur (1), qui est réalisé pour transformer un signal électrique en mouvement mécanique, avec une fonction de séparation pour éviter une détérioration de fonction telle qu'un coincement, comprenant un moyen pour amener une tension électrique plus élevée à l'actionneur (1) lors de l'activation de la fonction de séparation,
**caractérisé en ce que**
l'actionneur (1) présente un piston (2) déplaçable en translation, ainsi qu'un capteur de déplacement (6) pour saisir la position du piston (2) et pour générer un signal de capteur, dans lequel la tension plus élevée est amenée en fonction du signal de capteur.

2. Actionneur selon la revendication 1,
**caractérisé en ce que**
le moyen comprend un dispositif de commande (5), qui est réalisé pour augmenter la tension amenée à l'actionneur (1) lors de l'activation de la fonction de séparation,

3. Actionneur selon la revendication 2,
**caractérisé en ce que**
le dispositif de commande (5) est réalisé pour analyser le signal de capteur et pour déceler une détérioration de fonction.

4. Véhicule automobile,
**caractérisé en ce qu'**
il présente au moins un actionneur (1) selon l'une quelconque des revendications 1 à 3.

5. Procédé pour faire fonctionner un actionneur qui transforme un signal électrique en mouvement mécanique, dans lequel une fonction de séparation pour éviter une détérioration de fonction telle qu'un coincement est implémentée, dans lequel une tension électrique plus élevée est amenée à l'actionneur lors de l'activation de la fonction de séparation,
**caractérisé en ce que**
l'actionneur présente un piston déplaçable en translation, ainsi qu'un capteur de déplacement, qui saisit la position du piston et génère un signal de capteur, dans lequel la tension plus élevée est amenée en fonction du signal de capteur.

6. Procédé selon la revendication 5,
**caractérisé en ce qu'**
une détérioration de fonction telle qu'un coincement est décelée au moyen d'un dispositif de commande.
